# EUROPEAN PATENT APPLICATION

(11) **EP 4 506 425 A1**
(43) Date of publication of application: **12.02.2025**
(21) Application number: 24192066.9
(22) Date of filing: 31.07.2024
(51) Int. Cl.: C09D 11/30, B41M 5/52

(54) **AN INK COMPOSITION FOR INKJET PRINTING**

(30) Priority: 02.08.2023 GB 202311847
(71) Applicant: Domino UK Limited, Cambridge, Cambridgeshire CB23 8TU (GB)
(72) Inventor: Kyriacou, Andrew, Cambridge, CB23 8TU (GB)
(74) Representative: Tolfree, Adam Joseph Benjamin

(57) **Abstract**

A white colour can be formed by precipitating organic soluble cellulosic from a mixture of a fast evaporating organic solvent and water. Evaporation of the solvent and then the water leaves behind a porous cellulosic structure. The difference in refractive index between the cellulosic structure and air within the pores produces an observable white colour. Due to the non-homogeneous nature of the structure, its abrasion resistance is poor.

An improved inkjet ink composition is disclosed comprising a cellulosic polymer for forming a porous network structure; a blend of a nonsolvent for the cellulosic polymer and a solvent for the cellulosic polymer; the solvent being more volatile than the nonsolvent; a film forming binder with high polarity, the film forming binder being separately soluble in both the nonsolvent and the blend.

Evaporation of the solvent blend leaves behind a structure comprising a first solid phase of cellulosic polymer and a second solid phase of binder, which exhibits good opacity and improved abrasion resistance.

## Description

It is known that white colour can be formed by precipitating organic soluble cellulosic (e.g. ethyl cellulose) from a mixture of a fast evaporating organic solvent and water, for example acetone and water. After the acetone evaporates, the cellulosic phase separates with the water, forming a polymer network with droplets of water mixed throughout the solid phase. After the water evaporates, it leaves behind pores where there were previously droplets of water, now occupied by air. The difference in refractive index between the cellulosic structure and air results in sufficient light scattering to produce an observable white colour. Due to the non-homogeneous nature of the opaque cellulosic film, the structural strength, and thus abrasion resistance is poor so it can be easily removed by a single light rub with a finger.

US4389503A describes a solution to improve abrasion resistance through inclusion of a co-binder, i.e. a further binder in addition to the cellulose ester binder, however this has a significant deleterious effect on the opacity of the deposited ink.

The present invention was conceived to ameliorate this problem.

According to an aspect of the invention there is provided an inkjet ink composition a cellulosic polymer for forming a porous network structure; a blend of a nonsolvent for the cellulosic polymer and a solvent for the cellulosic polymer; the solvent being more volatile than the nonsolvent; a film forming binder that is substantially insoluble in acetone alone, the film forming binder being separately soluble in both the nonsolvent and the blend.

According to another aspect of the invention there is provided an inkjet ink composition comprising: a cellulosic polymer; a nonsolvent for the cellulosic polymer; a solvent for the cellulosic polymer, the solvent being more volatile than the nonsolvent; a film forming binder that is separately soluble in both the nonsolvent and the solvent blend of solvent and nonsolvent; and characterised in that the cellulosic polymer and film forming binder are incompatible such that when both the solvent and non-solvent evaporate, the cellulosic polymer and film forming binder form a heterogeneous structure that exhibits two glass transition temperatures.

The following may apply to either aspect of the invention.

Upon deposition of the ink composition on a substrate, the solvent, being more volatile, preferentially evaporates first. The increased concentration of nonsolvent in the blend that results leads to the precipitation of the cellulosic polymer forming a network structure comprising pores or voids. The high polarity of the film forming binder which makes it essentially insoluble in acetone but soluble in the nonsolvent, causes it to remain within the liquid nonsolvent whilst the cellulosic polymer phase separates from the nonsolvent, so that it does not coalesce with the porous network structure. The result, upon evaporation of all the solvent blend, is a heterogeneous structure exhibiting two glass transition temperatures, comprised from the highly scattering porous cellulosic polymer layer as a first solid phase, and a coherent film of the binder as a second solid phase.

As such, the film forming binder of the claimed composition, whilst providing improved adhesion of the printed deposit to a substrate, preserves the highly scattering open structure of the cellulosic polymer film that provides for good opacity.

As such the ink formulation of the invention enables an, optionally non-pigmented, ink composition that dries opaque, e.g. opaque white.

This contrasts with the co binders of US4389503A, which because of their compatibility with the cellulose, tend to coalesce with the cellulose to form a single solid phase film. This combination inhibits formation of the networked structure and light reflecting pores.

The nonsolvent preferably comprises water. Water is generally a preferred nonsolvent because it is cheap, non-toxic and many preferred cellulosic polymers are water insoluble. Nevertheless, depending on the cellulosic polymer selected, certain nonaqueous nonsolvents may be used instead or in combination with water, such as, for example, ethylene glycol and/or propylene glycol.

Favourably the nonsolvent is present at greater than ten weight percent before evaporation of the blend. Higher percentages of nonsolvent provide inks with higher opacity because they lead to more droplets of nonsolvent in the deposited layer and so more voids in the resulting ink and, in addition, greater film thickness.

Where the nonsolvent includes water, the cellulosic polymer may comprise one or more of: a cellulose ester and a cellulose ether. Alternative cellulosic polymers may be used if an aqueous solvent and a nonaqueous nonsolvent are used, including, for example one or more of: methyl cellulose, hydroxyethyl cellulose, hydroxypropyl cellulose, carboxymethyl cellulose, sodium carboxymethyl cellulose, or nanocellulose.

Cellulose esters are generally preferred as they provide better abrasion resistance compared with cellulose ethers.

More favourably, the cellulosic polymer may comprise one or more of: cellulose acetate propionate and cellulose acetate butyrate. Both of these have high solubility in organic solvents including both acetone and blends of acetone and ethanol which are preferred solvents.

The lower limit for the content of cellulosic polymer depends on the acceptable level of opacity required of the resulting film deposit. Increased content of cellulosic polymer provides increased opacity; it also increases the viscosity of the liquid ink. The upper boundary for acceptable cellulosic polymer content is typically limited by the maximum permitted viscosity of the ink. For certain applications, the composition may comprise between 3 and 10 inclusive weight percent cellulosic polymer prior to evaporation of the blend.

As most suitable cellulosic polymers are highly insoluble in water, the solvent for the cellulosic polymer is typically an organic solvent or a blend of organic solvents. Examples of suitable solvents include one or more of: acetone, methanol, ethanol and n-propanol.

The solvent preferably includes one or more of acetone and ethanol. An optimised composition may include a mix comprising both acetone and ethanol which because of their differing volatilities allows for fine tuning of evaporation rate and/or solubility of cellulosic polymer.

The film forming binder may comprise a polymer, oligomer or organic molecule that is insoluble in acetone without the presence of a protic co-solvent, such as, for example, water or ethanol.

As the properties of the cellulose layer that make it highly light scattering also cause it to be structurally very weak, there are potentially a great number of film forming binders that may form films that have a strength exceeding the highly scattering cellulose layer and thus improve the abrasion resistance of the deposit. Selection of a preferred film forming binder may be made taking into account the relative affinities of the cellulosic polymer and filming forming binder to the substrate on which the deposit is to be printed, e.g. glass, metal or plastic.

The film forming binder may comprise an ionic polymer and corresponding non-polymeric counter-ion. The non-polymeric counter-ion being volatile such that the film forming binder within the heterogeneous structure comprises a non-ionic polymer. The ionic polymer could be formed by neutralising an acidic or basic polymer. Generally, film forming binders comprising ionic polymer are preferred as they produce non-water sensitive (i.e. water insoluble) deposits after evaporation of the neutralising non-polymeric counter ion.

An added benefit of using an ionic film forming binder is that it is electrically conductive. This provides the possibility of providing a conductive ink without the need for additional conductive agents. As such, water and film forming binder may be present in the composition in sufficient quantity to provide a conductivity of at least 400 micro-siemens per centimetre independent of the presence or otherwise of an additional conductivity agent.

Examples of suitable film forming binders comprising non-ionic polymers include one or more of: Polyvinyl pyrrolidone, polyacrylic acid, polymethacrylic acid, polyethylene glycol, polyethyl oxazoline, polyhydroxyethylacrylate, polydimethylaminoacrylate, polyhydroxyethylmethacrylate, polydimethylaminomethacrylate, polyvinyl alcohol and nanocellulose. Experimentation has shown polyvinyl pyrrolidone efficacious. It is considered likely that other compounds would work because they are also soluble in water, allowing them to form a film from the aqueous phase, whilst simultaneously being expected to possess solubility in a blend of organic solvents and water.

Example of suitable film forming binders comprising ionic polymers include one or more of: amine/ammonia neutralised acrylic polymer, a co-polymer comprising amine and/or ammonia neutralised acrylic polymer, amine and/or ammonia neutralised methacrylic polymer, a co-polymer comprising amine/ammonia neutralised methacrylic polymer, amine/ammonia neutralised rosin a amine/ammonia neutralised rosin maleic modified rosin; amine/ammonia neutralised styrene maleic anhydride, a co-polymer comprising amine/ammonia neutralised styrene maleic anhydride, carboxylic acid neutralised polydimethylaminoacrylate; carboxylic acid neutralised polydimethylaminomethacrylate; amine and/or ammonia neutralised carboxy methyl cellulose; amine and/or ammonia neutralised carboxy methyl cellulose acetate butyrate.

Of these the following have been proven to work through experimentation by the inventor: amine and ammonia neutralised acrylic polymer, amine and ammonia neutralised methacrylic polymer, amine neutralised rosin and maleic modified rosin,

The others are thought to be plausible in view of being soluble in water, allowing them to form a film from the aqueous phase, whilst simultaneously being expected to possess solubility in a blend of organic solvents and water.

More favourably the film forming binder comprises an acrylic resin neutralised with an amine and/or ammonia.

Generally, the abrasion resistance of the dried deposited ink increases with increased weight percentage of film forming binder. Favourably, the film forming binder is present in sufficient quantity to form a separate binding film layer upon evaporation of the solvent blend to bind the light scattering cellulosic layer to the substrate, though the presence of any amount that provides an improved abrasion resistance compared with the cellulose film alone is advantageous. Experimentation has shown that compositions including non-ionic film forming binder present at two weight percent provide good abrasion resistance. For ionic film forming binders the 2% figure relates to the free acid or base component (e.g. polymeric component) of the film forming binder. Weight percentages below 2% were not tried but at least some would be expected to work.

The amount of film forming binder present is limited by reduced opacity of the resulting printed deposit. Experimentation has indicated that compositions comprising a weight percent ratio of cellulosic polymer: film forming binder polymer of between 4:1 to 1:1 provide acceptable opacities, i.e. 80% or greater. Deposits formed using a ratio of 1:2 were transparent. It is speculated this is a consequence of the polymer of the binder filling the voids within the cellulose web which inhibits scattering of light. Ratios between 1:1 and 1:2 have yet to be tested.

According to another aspect of the invention there is provided a printer ink cartridge holding the inkjet ink composition in any form variously described above.

According to another aspect of the invention there is provided a printing method comprising the steps of providing a composition in any form variously described above and/or according to any one of claims 1 to 11, and depositing the ink composition onto a substrate, and optionally permitting the deposited composition to dry.

In another aspect of the invention there is provided an article marked with a printed deposit using the above printing method.

According to another aspect of the invention there is provided a printed deposit comprising a light scattering layer having a porous network structure comprised of a cellulosic polymer and a binder layer, the binder layer lying at least partially between the light scattering layer and a substrate on which the printed deposit lies to bind the light scattering layer to the substrate.

### Brief Description of Drawings

**Figure 1** illustrates stages of formation of an opaque heterogenous printed deposit comprising a highly scattering layer;
**Figure 2** is a scanning electron microscope image of a printed deposit of a highly scattering cellulose film without binder layer (Fig 2);
**Figure 3** is a scanning electron microscope image of a printed deposit having a heterogeneous structure comprising a highly scattering cellulose film and a separate binder layer; and
**Figure 4** is a scanning electron microscope image of a printed deposit of a prior art formulation in which the cellulose and binder are coalesced.

### Example Formulations

A code comprised from drops of each of the following non-limiting liquid ink formulations were deposited on a glass substrate with a Domino^{®} 60 µm Ax Series continuous inkjet printer. This was carried out in an air-conditioned laboratory with a room temperature of approximately 21 deg Celsius and humidity below 40%, although this was not strictly controlled.

The abrasion resistance of the dried deposits was measured using a Taber Linear Abraser - Model 5750, using a CS-5 Calibrase felt tip, applying 350g of force. Each of the following formulations provided a satisfactory result, deemed to require at least 20 rubs to show signs of damage to the printed code.

The opacity of the dried drops was measured using an X-Rite eXact spectrophotometer on films drawn down by hand on a glass substrate, using a 76 µm K-bar. Each of the following formulations provided a satisfactory result, that being at least 80 % opacity.

### Example 1: "Optimised" formulation

| **Ingredient** | **wt%** |
|---|---|
| Acetone | 16.36 |
| Ethanol | 50.0 |
| Deionised Water | 16.04 |
| Cellulose Acetate Propionate (EastmanTM CAP 504-0.2) | 8.0 |
| Acrylic Resin (Joncryl^{™} 682) | 8.0 |
| 2-Amino-2-Methyl-1-Propanol | 1.6 |

Cellulose Acetate Propionate was used as a cellulosic polymer. Water was used as the nonsolvent for the cellulosic polymer. A blend of acetone and ethanol were used for the solvent for the cellulosic polymer. A carboxylic acid functional acrylic resin with aminomethyl propanol was used as the film forming binder. The Aminomethyl propanol neutralises the acrylic making it ionic and water soluble. As a consequence of its ionic nature, the formulation does not need to include a separate conductivity agent to permit deposition by continuous inkjet printing.

### Example 2: Formulation with varied nonsolvent (water) Content

| **Ingredient** | **Low (wt%)** | **Medium (wt%)** | **High (wt%)** |
|---|---|---|---|
| Acetone | 61.4 | 56.4 | 51.4 |
| Ethanol | 15.0 | 15.0 | 15.0 |
| Deionized Water | 10.0 | 15.0 | 20.0 |
| Cellulose Acetate Propionate (Eastman^{™} CAP 504-0.2) | 8.0 | 8.0 | 8.0 |
| Acrylic Resin (Joncryl^{™} 682) | 4.0 | 4.0 | 4.0 |
| 2-Amino-2-Methyl-1-Propanol | 1.6 | 1.6 | 1.6 |

### Example 3: Formulations with Varied Film forming binder Content

| **Ingredient** | **Low (wt%)** | **Medium (wt%)** | **High (wt%)** |
|---|---|---|---|
| Acetone | 59.2 | 56.4 | 50.8 |
| Ethanol | 15.0 | 15.0 | 15.0 |
| Deionized Water | 15.0 | 15.0 | 15.0 |
| Cellulose Acetate Propionate (Eastman^{™} CAP 504-0.2) | 8.0 | 8.0 | 8.0 |
| Acrylic Resin ( BASF^{™} Joncryl^{™} 682) | 2.0 | 4.0 | 8.0 |
| 2-Amino-2-Methyl-1-Propanol | 0.8 | 1.6 | 3.2 |

### Example 4: Formulation with Ethyl Cellulose - Acetone as Sole Solvent

| **Ingredient** | **wt%** |
|---|---|
| Acetone | 81.5 |
| Deionised Water | 10 |
| Ethylcellulose (Ethocel^{™} std 7) | 5 |
| Acrylic Resin (Joncryl^{™} 682) | 2.5 |
| 2-Amino-2-Methyl-1-Propanol | 1 |

### Example 5: Formulation with Ethyl Cellulose - ethanol as Sole Solvent

| **Ingredient** | **wt%** |
|---|---|
| Ethanol | 73.2 |
| Deionised Water | 20 |
| Ethylcellulose (Ethocel^{™} std 7) | 4 |
| Acrylic Resin (Joncryl^{™} 682) | 2 |
| 2-Amino-2-Methyl-1-Propanol | 0.8 |

### Example 6: Using Cellulose Acetate Butyrate as a Cellulosic Polymer

| **Ingredient** | **wt%** |
|---|---|
| Acetone | 81.5 |
| Deionised Water | 10 |
| Cellulose Acetate Butyrate (Eastman^{™} CAB 553-0.4) | 5 |
| Acrylic Resin (Joncryl^{™} 682) | 2.5 |
| 2-Amino-2-Methyl-1-Propanol | 1 |

### Example 7 using PVP as a Film forming binder

| **Ingredient** | **wt%** |
|---|---|
| Acetone | 38.625 |
| Ethanol | 38.625 |
| Deionised Water | 15 |
| Ethylcellulose (Ethocel^{™} std 7) | 5 |
| Polyvinyl pyrrolidone (PVP) | 2.5 |
| Lithium nitrate | 0.25 |

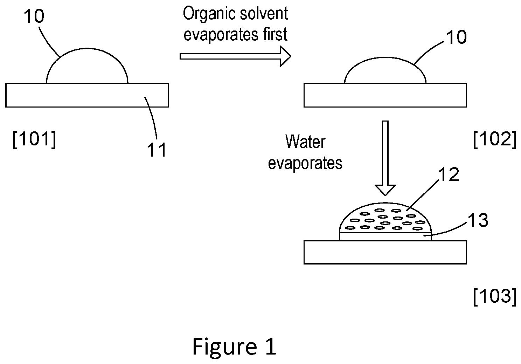

In example 7, Lithium nitrate is used as a conductivity agent. As PVP is a non-ionic material, it does not impart conductivity, therefore a separate ionic material is required to make the formulation printable by continuous inkjet. Figure 1 illustrates stages of formation of a heterogeneous printed deposit formed from an inkjet ink composition such as those exampled above. A drop of ink 10 comprising the cellulosic polymer, film forming binder, and blend of solvent and water are deposited by an inkjet printing process onto a substrate 11 [101]. The organic solvent or solvents, being more volatile, evaporate preferentially leaving a fluid containing a higher proportion of water. This causes a phase separation within the drop to provide a cellulosic phase and an aqueous phase [102]; the film forming binder being substantially only present in the aqueous phase. As the water evaporates, evaporated water droplets leave a porous cellulose network structure with a high number of voids that provides the deposit with high light scattering properties. Upon evaporation of all the water, there remains a heterogeneous structure [103] comprised from the highly light scattering cellulose web layer 12 and a binder layer 13 comprised primarily from the film forming binder which lies between the cellulose web layer and the substrate, essentially binding the cellulosic polymer to the substrate. A consequence of the heterogeneous structure is that the printed deposit exhibits two Tg values, one associated with the cellulose web layer 12 and the other associated with the binder polymer layer 13.

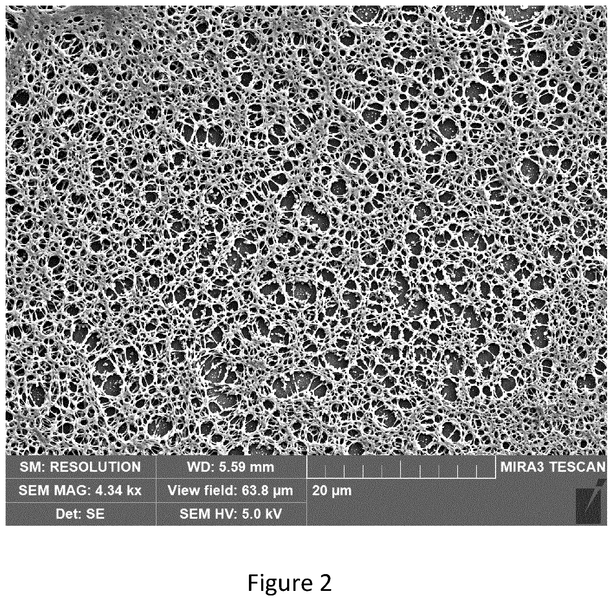

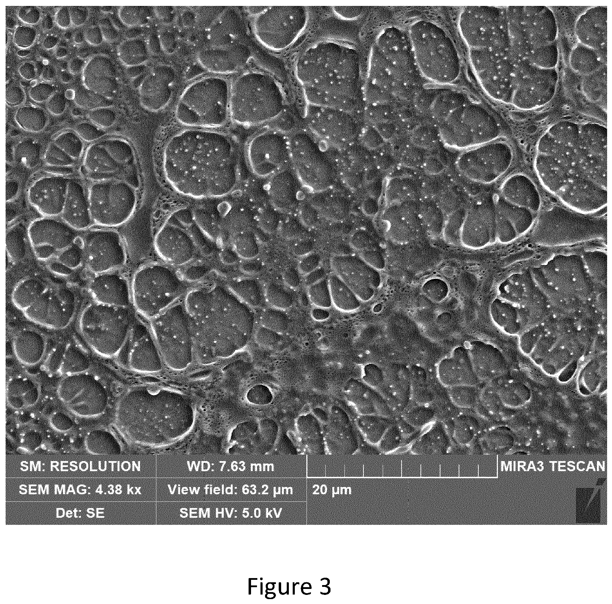

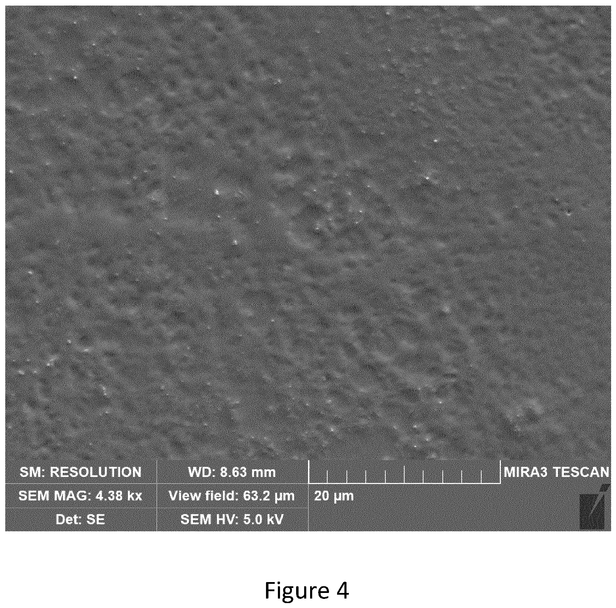

Figures 2, 3 and 4 are scanning electron microscope images that provide a comparison of deposits of a highly scattering cellulose film without binder layer (Fig 2); a heterogeneous structure comprising a highly scattering cellulose film with binder layer formed using one of the afore exampled ink formulations (Fig 3); and a cellulose film with a compatible binder similar to that used in US4389503A (Fig 4). It can be seen that the deposit of Fig 3 preserves the light scattering porous structure to a significantly greater extent compared with that shown in Fig 4 and as such the deposit of Fig 3 has improved opacity over that of Fig 4.

## Claims

1. An inkjet ink composition comprising:
a cellulosic polymer for forming a porous network structure;
a blend of a nonsolvent for the cellulosic polymer and a solvent for the cellulosic polymer; the solvent being more volatile than the nonsolvent;
a film forming binder that is substantially insoluble in acetone alone, the film forming binder being separately soluble in both the nonsolvent and the blend.

2. A composition according to claim 1 wherein the non-solvent comprises water.

3. A composition according to claim 2 wherein the cellulosic polymer comprises one or more of: a cellulose ester and a cellulose ether.

4. A composition according to claim 3 wherein the cellulosic polymer comprises one or more of: cellulose acetate propionate and cellulose acetate butyrate.

5. A composition according to any previous claim wherein the solvent comprises one or more of: acetone, methanol, ethanol and propanol.

6. A composition according to claim 5 wherein the solvent comprises acetone and ethanol.

7. A composition according to any previous claim wherein the film forming binder comprises an ionic polymer and corresponding non-polymeric counter-ion.

8. A composition according to any previous claim wherein the film forming binder comprises a carboxylic acid functional acrylic neutralised by a volatile amine and/or ammonia.

9. A composition according to any claim 1-6 in which the film forming binder comprises polyvinyl pyrrolidone.

10. A composition according to any previous claim wherein the nonsolvent is present at greater than ten weight percent.

11. A composition according to claims 2 and 7 and optionally any claim 3-6 and 8-10, wherein the water and film forming binder are present in sufficient quantity to provide the composition with a conductivity of at least 400 micro-siemens per centimetre irrespective of the presence of an additional conductivity agent.

12. A printer ink cartridge holding the inkjet ink composition of any claim 1-11.

13. A printed deposit comprising a light scattering layer having a porous network structure comprised of a cellulosic polymer and a binder layer, the binder layer lying between the light scattering layer and a substrate on which the printed deposit lies to bind the light scattering layer to the substrate.

14. A printing method comprising the steps of providing a composition according to any one of claims 1 to 11, and depositing the ink composition onto a substrate, and optionally permitting the deposited composition to dry.

15. An article marked with a printed deposit using the method of claim 14.
